# EUROPEAN PATENT SPECIFICATION

(11) **EP 0 345 725 B1**
(45) Date of publication and mention of the grant of the patent: **20.10.1993**
(21) Application number: 89110217.0
(22) Date of filing: 06.06.1989
(51) Int. Cl.: H01M 2/02, H01M 10/14

(54) **Gas vault structure for storage battery**
Gas- Gewölbestruktur für Akkumulatorbatterie
Structure en voûte pour gaz dans une batterie d'accumulateur

(30) Priority: 09.06.1988 FI 882729
(43) Date of publication of application: 13.12.1989
(73) Proprietor: NESTE OY, FIN-02150 Espoo (FI)
(72) Inventor: Nieminen, Jukka-Pekka, SF-06400 Porvoo (FI); Kemppi, Ahti, SF-16601 Järvelä (FI); Mäisti, Asko, SF-06100 Porvoo (FI); Savolainen, Esko, SF-15880 Hollola 3 (FI); Kärnä, Toivo, SF-06400 Porvoo (FI); Jääskö, Niilo, SF-06400 Porvoo (FI)
(74) Representative: Tiedtke, Harro, Dipl.-Ing.

(56) References cited:
- WO-A-87/04011
- GB-A- 2 041 632

## Description

The present invention relates to a gas vault structure for a storage battery according to the preamble of claim 1.

A storage battery is conventionally produced so that cells are stacked into a box provided with partitions, and as the last phase of battery production, a cover is fixed on top of the box so that the electrolyte solution will not leak from one compartment into another, or out therefrom.

In the designs known in the art the gas space is generally produced with the aid of the battery housing and a cover. Therefore, the gas space comprises the upper part of the battery housing which is closed by the cover. In the present design the housing and the cover of the battery must be welded together, usually by mirror-welding. For the material required for the battery housing and cover polypropene plastics is usually employed. The cover of the battery is provided with a big hole at each cell for an acid filling aperture.

According to the document GB-A-2 041 632 there is disclosed a gas vault structure of an electric storage battery, wherein the gas vault structure comprises a plurality of individual casings defining cell compartments for receiving electrolyte. Each cell casing is formed in two interengaging parts, wherein the upper part of these two parts forms a gas vault engaging with the lower part of the cell casing. An external battery container is molded around and between the assembly of the cell casings, thereby sealing the two-part cell casings gainst an escape of electrolyte. It is consequently a drawback of the method of manufacture said gas vault structure of this prior art that a number of individual components are necessary in this battery, which makes manufacture thereof very time-consuming and expensive.

It is the object of the present invention to obtain a gas vault structure by means of which a storage battery can be manufactured easily and efficiently.

This object is achieved with the features indicated in the characterizing part of claim 1. According to these features, the gas vaults are tightly fitted on the top of the cells, thereby forming the respective gas spaces.

A significant function set for the gas vault structure of the invention is to act in one-time casting as spacer structure, determining the wall thickness of the cast because of which the consumption of the casting material substantially decreases. In addition, cheaper material than casting material may be used for gas vault structure.

Preferable embodiments of the invention are defined in the claims 2 to 15. In the following the invention is further illustrated by advantageous embodiments with reference to the enclosed figures.

Fig. 1 presents an advantageous embodiment for a storage battery provided with the gas vault structure in partly sectioned axonometric view.

Fig. 2 presents an advantageous embodiment of the monopolar and bipolar plate employed in the storage battery in axonometric view.

Fig. 3 presents an advantageous embodiment of the gas vault structure of a 12V storage battery in top view.

Fig. 4 presents an embodiment according to Fig. 3 in partly sectioned elevational view.

Figs 5 and 6 present schematically an advantageous attachment design of a gas vault to a cell.

Fig. 7 presents schematically another advantageous attachment design of a gas vault to a cell.

Fig. 8 presents schematically a third advantageous attachment design of a gas vault to a cell.

Fig. 9 presents schematically a fourth advantageous attachment design of a gas vault to a cell.

Fig. 10 presents schematically a fifth advantageous attachment design of a gas vault to a cell.

Fig. 11 presents an advantageous embodiment of a mould structure for a storage battery used in a casting method in schematical elevational view.

Fig. 12 presents in schematical elevational view a cell assembly provided with gas vault structure turned upside down against the bottom plate of the mould structure.

Fig. 13 presents in schematical elevational view a mobile mould structure with the aid of which a spacer structure is pushed against the cell assembly.

Fig. 14 presents in schematical elevational view a mobile mould structure in a phase in which the spacer structure has been pushed against the cell assembly and the mobile mould structure starts to move away from the cell assembly.

Fig. 15 presents in schematical elevational view a mobile mould structure which has moved away from the cell assembly a distance equivalent to the wall thickness.

Fig. 16 presents in schematical elevational view another advantageous embodiment of the mould structure of a storage battery employed in a casting method.

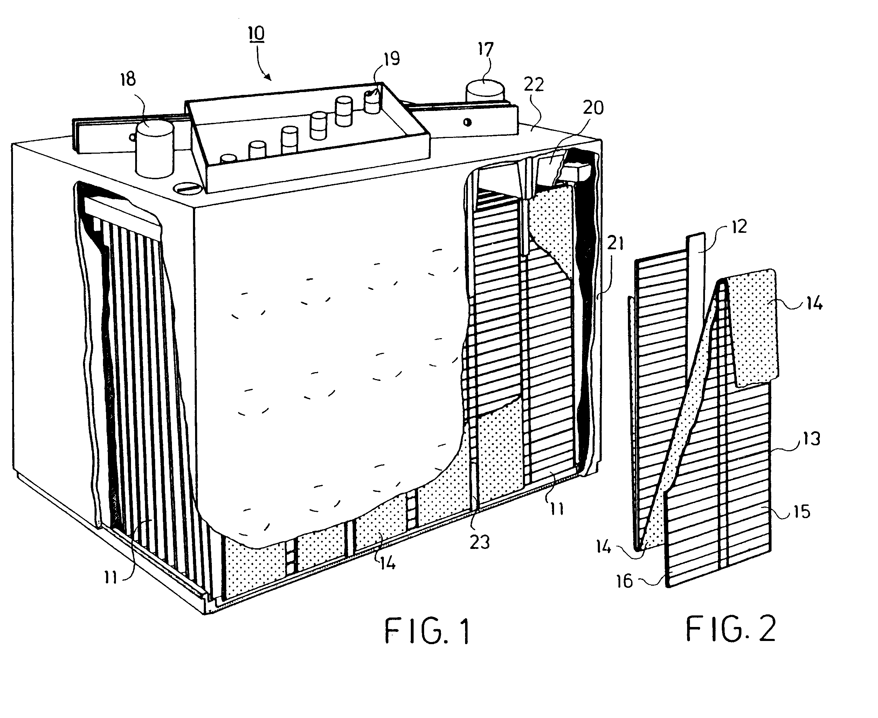

In the embodiments presented in Figs 1-16 the cells of a storage battery 10 are indicated by reference numeral 11. Each cell 11 contains electrolyte and monopolar and/or bipolar plates separated by separator plates 14 and coated with positive and/or negative active mass.

In Fig. 1 the positive terminal of the storage battery 10 is indicated by reference numeral 17 and the negative terminal by reference numeral 18. By reference numeral 19 is indicated the overpressure valve and by reference numeral 20 the gas vault structure formed in the upper part of the cells 11. The envelope structure of the storage battery 10 consists of a housing 21, a cover 22 and partitions 23 separating the cells 11.

In Fig. 2 a monopolar plate is indicated by reference numeral 12 and a bipolar plate by reference numeral 13. The bipolar plate 13 is coated with positive active mass 15 and negative active mass 16, whereas the monopolar plate 12 is coated merely with either positive active mass 15 or negative active mass 16. In the embodiment shown in Fig. 2 for separator plates 14 is used felt-like separator plate material in which electrolyte has been impregnated.

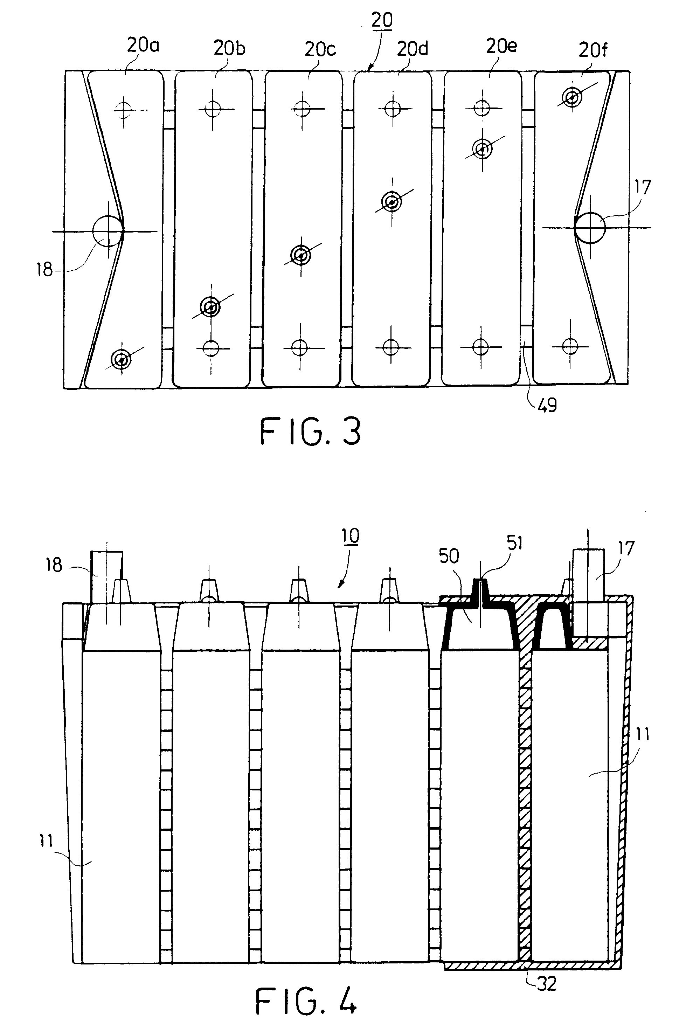

In Figs 3 and 4 the gas vault structure of the invention is generally indicated by reference numeral 20. In the present embodiment the gas vault structure 20 consists of gas vaults 20a,20b,20c,20d,20e and 20f which are connected to one another with the aid of connecting members 49. Each gas vault 20a-20f comprises a gas space 50 and an acid filling aperture 51 in the upper part of the cell 11. It goes without saying that the gas vault structure 20 may also consist of separate gas vaults 20a-20f.

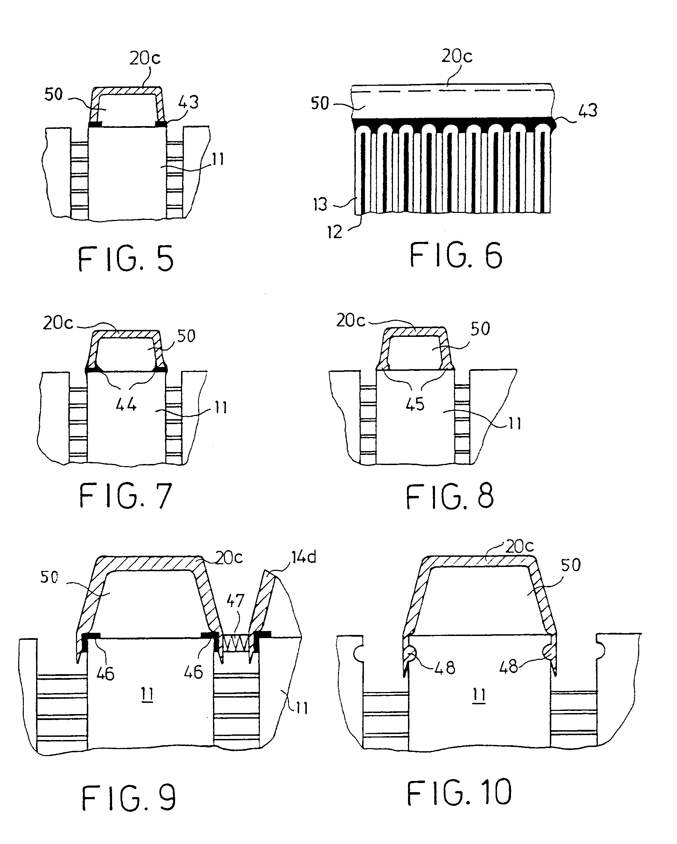

In the embodiment presented in Figs 5 and 6 the gas vault 20c of the gas vault structure 20 is glued to the cell 11 with a soft planar packing 43 which is tightly compressed between the cell 11 and the gas vault 20c when the cell assembly prior to casting is turned upside down in a manner to be described below. In the rest of the gas vaults 20a,20b and 20d-20f of the gas vault structure 20, a similar soft planar packing 43 is, of course, used.

In the embodiment shown in Fig. 7, the gas vault 20c is glued on top of the cell 11 with glue joints 44. It goes without saying that a similar procedure is adopted for the rest of the gas vaults of the gas vault structure 20.

In the embodiment of Fig. 8 the gas vault 20c is attached to the cell 11 by heating the margins of the gas vault 20c, these being thereafter pressed on the cell. In Fig. 8 the heated margins of the gas vault 20c are indicated by reference numeral 45.

In the embodiment of Fig. 9 the upper and side surfaces of the cell 11 are sealed with a sealing 46. In the gas vault 20c and 20d, equivalent to the rest of the gas vaults, the stress is directed inwards. Alternatively, a spring means 47 may be used for providing stress between the gas vaults 20c and 20d, respectively between other gas vaults.

In the embodiment of Fig. 10, the gas vault 20c is attached to the cell 11 by mechanical clicking joint 48. In the gas vault 20c, as well as in the other gas vaults, the stress is directed inwards, whereby a reliable attaching is provided.

In the most common embodiment of the invention, the following measures are carried out prior to casting. The connecting straps are welded to the monopolar plates 12. The gas vaults 20a-20f are fitted on top of the cells and a mould structure or an outer mould 30 is fitted around the cell assembly. The thickness of casting is determined with the aid of a spacer structure 38, which spacer structure 38 remains inside the cast. The spacer structure 38 mediates the compression of the mould structure 30 and holds the cell assembly together, whereby the cell assembly is controlled without being bound or glued. The walls of the mould structure 30 may be either mobile or fixed.

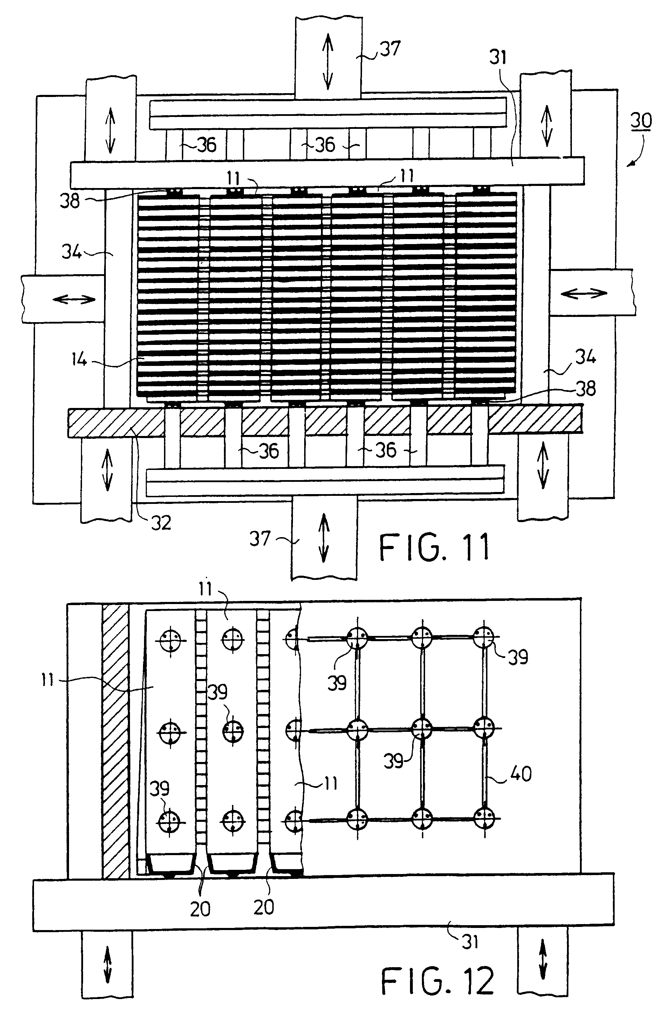

The mould structure employed in a casting method of a storage battery provided with a gas vault structure of the invention is in Fig. 11 generally indicated by reference numeral 30. In said embodiment the mould structure 30 consists of walls 31 and 32, disposed in the direction of the sides of the storage battery 10, said walls being mobile. Furthermore, the mould structure 30 comprises end walls 33 and 34 which in said embodiment are likewise mobile. The two other opposite walls of the mould structure 30 are not shown in Fig. 11.

A pusher means 37 provided with pins 36 is connected to side walls 31 and 32 of the mould structure 30. In the embodiment of Figs 11-15 for spacer structure is used a spacer structure 38 consisting of spacing washers 39. The spacing washers 39 and their clips 40 constitute the net-like spacer structure 38, as shown in Fig. 12.

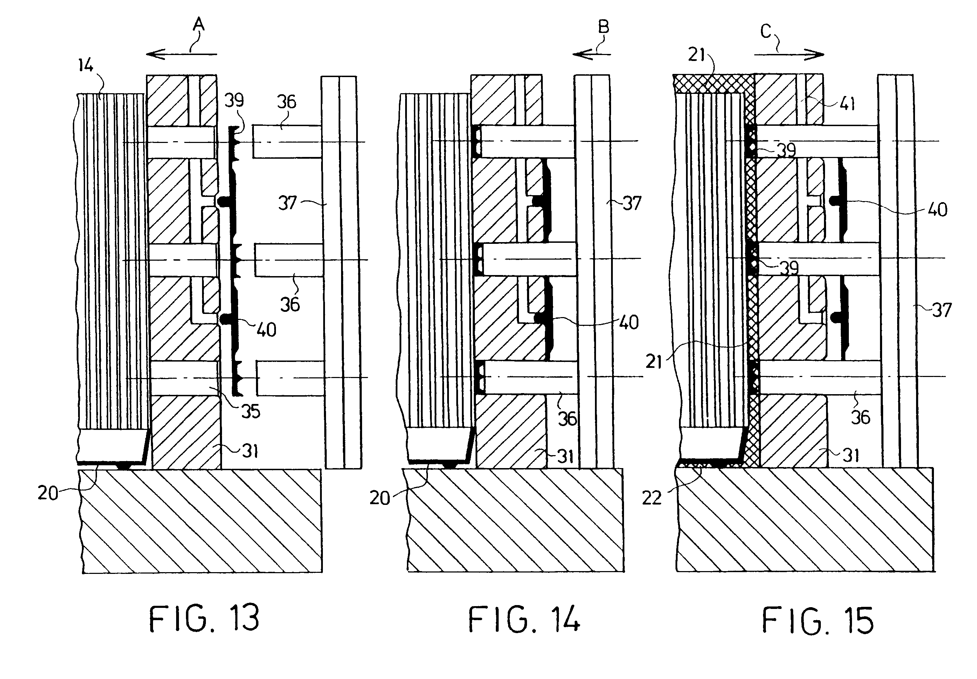

The movements of the side wall 31 of the mould structure 30 can best be seen in Figs 13-15. In the step shown in Fig. 13, the side wall 31 has moved in the direction indicated by arrow A, and is located against the cell 11. The pins 36 of the pusher means 37 have withdrawn from the holes 35 in the side wall 31.

In the phase shown in Fig. 14, the pusher means 37 moves in the manner indicated by arrow B, whereby the pins 36 push the spacing washers 39 of the spacer structure 38 against the cell 11, whereas the clips 40 remain attached to the outer wall of the side wall 31 of the mould structure 30.

As shown in Fig. 15, the side wall 31 has moved in the direction indicated by arrow C a distance determined by the spacing washers 39, whereby after the casting an envelope structure is produced for a storage battery consisting of a housing 21, a cover 22 and partitions 23 separating the cells 11. Finally, the clips 40 are blown off with the aid of an out-blowing system of passages 41. As is best seen in Fig. 15, the spacing washers 39 remain inside the cast.

According to an advantageous embodiment presented in Figs 11-15, the above-mentioned cell assembly is transferred to serve as an inner mould as follows. The parts 31 and 32 of the outer mould 30 disposed in the direction of the sides of the storage battery 10 are urged against the sides of the cell assembly in that it is compressed into its final thickness, and at the same time, the cell assembly, supported therewith, can be transferred away from the stacking jig. Then, the terminals 17 and 18 of the storage battery 10 (Figs 1 and 4) can be attached to the end pieces of the set of connecting wires e.g. by welding. Thereafter, the press rods 36 pushing through the holes 35 in the side piedces 31 and 32 of the outer mould 30, while penetrating therein, cut first the spacing washers 39 provided with teeth off from their clips 40 and thereafter push them ahead against the sides of the cell assembly, whereby they start to support the cell assembly, and the parts 31 and 32 of the outer mould are able to withdraw, to be at a distance equivalent to the wall thickness from the surface of the cell assembly. Thereafter, gas vaults of a gas vault structure 20 are fitted above the final upper surface of the cell assembly, making it feasible to provide a gas space above the cell assembly. Thereafter, the part 31 of the outer mould 30 pushes itself in place and the terminals 17 and 18 (Figs 1 and 4) push themselves tightly into apertures of appropriate shape located therein (not depicted). Also other parts of the outer mould 30 push themselves in place. The outer mould 30 can be turned so that the storage battery 10 being cast is upside down although this is not necessary. Thereafter the space between the inner and outer moulds is started to be filled with the material mentioned in the Finnish patent application No. 855096, whereby an envelope structure for a battery 10 consisting of a housing 21, a cover 22 and partitions 23 separating the cells 11 is produced.

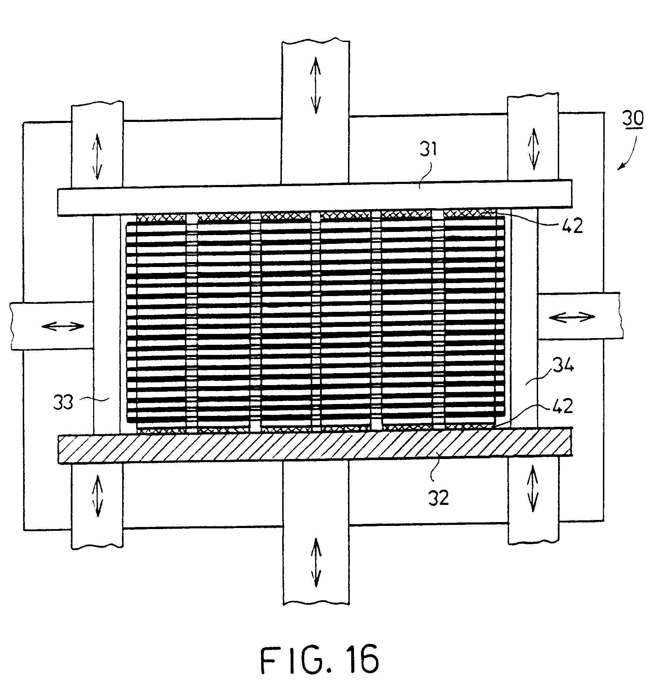

According to another advantageous embodiment shown in Fig. 16, the other side part 32 of the outer mould 30 serves as a stacking jig, and the stacking is so carried out that spacing strips 42 equivalent to the above-mentioned spacing washers 39 are first placed on said jig, on top of which a cell assembly is stacked. After a sufficient number of cell elements is stacked, spacing strips 42 are placed thereon, and the side piece 31 of the outer mould 30 to be placed thereon is urged in place. The terminals 17 and 18 (Fig. 1 and 4) is welded in place, the part 31 of the outer mould 30 pushes itself in place, the end pieces 33 and 34 of the outer mould 30, or, if in the same outer mould 30 several storage batteries are cast in a row, the intermediate and end pieces of the outer mould 30 are pushed in place, and thereafter, the collecting of the cover part and the envelope structure takes place in the same way as in the preceding embodiment.

## Claims

1. A gas vault structure (20) enclosed in an outer container (21, 22) for a storage battery (10) comprising several cells (11) and gas vaults (20a - 20f) serving as inner core for forming a gas space (50) in the upper part of said cells (11) during a casting of said outer container (21, 22), each cell (11) containing electrolyte, a plurality of plates (12, 13, 14) and electrical connectors interconnecting said cells (11) and/or plates (12, 13, 14), **characterized in that** said gas vaults (20a - 20f) are tightly fitted on the top of said cells (11), thereby forming said gas space (50).

2. A gas vault structure (20) according to claim 1, **characterized in that** said vaults (20a - 20f) are also arranged to serve as an inner core during simultaneous casting of partitions (23) separating said cells (11) and said outer container (21, 22).

3. A gas vault structure according to claim 1 or 2, **characterized in that** said gas vaults (20a - 20f) are arranged to serve as outlets for overpressure caused by the air heated during the cast.

4. A gas vault according to any one of claims 1 to 3, **characterized in that** said gas vaults (20a - 20f) are arranged to serve as sealing members of said gas space (50), preventing the entry of the cast into said gas space (50).

5. A gas vault structure according to any one of claims 1 to 4, **characterized in that** said gas vaults (20a - 20f) are arranged to serve as a spacer structure in the cast, determining the wall thickness thereof.

6. A gas vault structure according to any one of claims 1 to 5, **characterized in that** said gas vaults (20a - 20f) are connected with one another with the aid of connecting members (49).

7. A gas vault structure according to any one of claims 1 to 5, **characterized in that** said gas vault structure (20) consists of separate gas vaults (20a - 20f).

8. A gas vault structure according to any one of claims 1 to 7, **characterized in that** each gas vaults (20a - 20f) comprises in the upper part of the cell (11) a gas space (50) and an acid filling aperture (51).

9. A gas vault structure according to any one of claims 1 to 8, **characterized in that** said gas vaults (20a - 20f) are glued to said cells (11) with a soft planar packing (43) which is compressed tightly between said cell (11) and said gas vault.

10. A gas vault structure according to any one of claims 1 to 8, **characterized in that** said gas vaults (20a - 20f) are glued on top of said cellc (11) with glue joints (44).

11. A gas vault structure according to any one of claims 1 to 8, **characterized in that** said gas vaults (20a - 20f) are attached to said cells (11) by heating the margins of said gas vault and pressing the heated margins (45) on said cell (11).

12. A gas vault structure according to any one of claims 1 to 8, **characterized in that** the upper and side surfaces of said cells (11) are sealed with a seal (46), and that in said gas vaults (20a - 20f) prevails an inwards directed stress.

13. A gas vault structure according to claim 12, **characterized in that** the inwards directed stress of said gas vaults (20a - 20f) has been provided with the aid of a spring means (47) located between adjacent gas vaults.

14. A gas vault according to any one claims 1 to 8, **characterized in that** said gas vaults (20a - 20f) are attached to said cells (11) by mechanical clicking joint (48).

15. A gas vault structure according to claim 14, **characterized in that** in said gas vaults (20a - 20f) prevails inwards directed stress.

## Patentansprüche

1. Gasgewölbestruktur (20), die in einem äußeren Behälter (21, 22) für eine Speicherbatterie (10) mit mehreren Zellen (11) und Gasgewölben (20a - 20f), die als innerer Kern zur Bildung eines Gasraums (50) im oberen Teil der Zellen (11) während eines Gießvorgangs des äußeren Behälters (21, 22) dienen, aufgenommen ist, wobei jede Zelle (11) Elektrolyt, eine Vielzahl von Platten (12, 13, 14) und die Zellen (11) und/oder Platten (12, 13, 14) miteinander verbindende elektrische Verbinder aufweist, **dadurch gekennzeichnet**, daß die Gasgewölbe (20a - 20f) dicht oben auf den Zellen (11) befestigt sind, wodurch sie den Gasraum (50) bilden.

2. Gasgewölbestruktur (20) nach Anspruch 1, **dadurch gekennzeichnet, daß** die Gasgewölbe (20a - 20f) auch so angeordnet sind, daß sie als innerer Kern beim gleichzeitigen Gießen von Trennwänden (23), die Zellen (11) trennen und dem äußeren Behälter (21, 22) dienen.

3. Gasgewölbestruktur nach Anspruch 1 oder 2, **dadurch gekennzeichnet, daß** die Gasgewölbe (20a - 20f) so angeordnet sind, daß sie als Auslässe für einen, durch beim Gießen erhitzte Luft hervorgerufenen Überdruck dienen.

4. Gasgewölbe nach einem der vorstehenden Ansprüche 1 bis 3, **dadurch gekennzeichnet, daß** die Gasgewölbe (20a - 20f) so angeordnet sind, daß sie als Dichtelemente des Gasraums (50) dienen, die den Eintritt von Gußmasse in den Gasraum (50) verhindern.

5. Gasgewölbestruktur nach einem der vorhergehenden Ansprüche 1 bis 4, **dadurch gekennzeichnet, daß** die Gasgewölbe (20a - 20f) so angeordnet sind, daß sie als Abstandshalter in dem Gußteil dienen und dessen Wanddicke bestimmen.

6. Gasgewölbestruktur nach einem der vorstehenden Ansprüche 1 bis 5, **dadurch gekennzeichnet, daß** die Gasgewölbe (20a - 20f) mit Hilfe von Verbindungsteilen (49) miteinander verbunden sind.

7. Gasgewölbestruktur nach einem der Ansprüche 1 bis 5, **dadurch gekennzeichnet, daß** die Gasgewölbestruktur (20) aus einzelnen Gasgewölben (20a - 20f) besteht.

8. Gasgewölbestruktur nach einem der vorstehenden Ansprüche 1 bis 7, **dadurch gekennzeichnet, daß** jedes Gasgewölbe (20a - 20f) im oberen Teil der Zelle (11) einen Gasraum (50) und eine Säureeinfüllöffnung (51) aufweist.

9. Gasgewölbestrinktur nach einem der vorstehenden Ansprüche 1 bis 8, **dadurch gekennzeichnet, daß** die Gasgewölbe (20a - 20f) mit einer weichen Flachdichtung (43), die zwischen der Zelle (11) und dem Gasgewölbe dicht zusammengepresst ist, auf die Zellen (11) geklebt sind.

10. Gasgewölbestruktur nach einem der vorstehenden Ansprüche 1 bis 8, **dadurch gekennzeichnet, daß** die Gasgewölbe (20a - 20f) mit Klebeverbindern (44) oben auf die Zellen (11) geklebt sind.

11. Gasgewölbestruktur nach einem der vorstehenden Ansprüche 1 bis 8, **dadurch gekennzeichnet daß** die Gasgewölbe (20a - 20f) durch Heizen der Ränder der Gasgewölbe und Pressen der erhitzten Ränder (45) auf die Zelle (11) an den Zellen (11) befestigt sind.

12. Gasgewölbestruktur nach einem der vorstehenden Ansprüche 1 bis 8, **dadurch gekennzeichnet, daß** die obere und seitlichen Flächen der Zellen (11) mit einer Dichtung (46) abgedichtet sind, und daß in den Gasgewölben (20a - 20f) eine nach innen gerichtete Spannung vorherrscht.

13. Gasgewölbestruktur nach Anspruch 12, **dadurch gekennzeichnet, daß** die nach innen gerichtete Spannung der Gasgewölbe (20a - 20f) mit Hilfe einer Federeinrichtung (47) geschaffen ist, die zwischen benachbarten Gasgewölben angeordnet ist.

14. Gasgewölbestruktur nach einem der Ansprüche 1 bis 8, **dadurch gekennzeichnet, daß** die Gasgewölbe (20a - 20f) mit mechanischen Schnappverbindern (48) an den Zellen (11) befestigt sind.

15. Gasgewölbestruktur nach Anspruch 14, **dadurch gekennzeichnet, daß** in den Gasgewölben (20a - 20f) eine nach innen gerichtete Spannung vorherrscht.

## Revendications

1. Structure en voûte pour gaz (20) enfermée dans un conteneur externe (21, 22) pour une batterie d'accumulateur (10) comprenant plusieurs cellules (11) et des voûtes à gaz (20a - 20f) servant de noyau interne pour former un espace à gaz (50) dans la partie supérieure desdites cellules (11) pendant la coulée dudit conteneur externe (21, 22), chaque cellule (11) contenant de l'électrolyte, une pluralité de plaques (12, 13, 14) et des connecteurs électriques interconnectant lesdites cellules (11) et/ou des plaques (12, 13, 14), caractérisée en ce que lesdites voûtes à gaz (20a - 20f) sont fixées étroitement à la partie supérieure desdites cellules (11), formant ainsi ledit espace à gaz (50).

2. Structure en voûte pour gaz (20) selon la revendication 1, caractérisée en ce que lesdites voûtes (20a - 20f) sont également disposées pour servir de noyau interne pendant la coulée simultanée de cloisons (23) séparant lesdites cellules (11) et ledit conteneur externe (21, 22).

3. Structure en voûte pour gaz selon la revendication 1 ou 2, caractérisée en ce que lesdites voûtes à gaz (20a - 20f) sont disposées de manière à servir de sorties pour une surpression causée par l'air chauffé pendant la coulée.

4. Structure en voûte pour gaz selon l'une quelconque des revendications 1 à 3, caractérisée en ce que lesdites voûtes à gaz (20a - 20f) sont disposées pour servir d'éléments d'étanchéité dudit espace à gaz (50), empêchant l'entrée du matériau de coulée dans ledit espace à gaz (50).

5. Structure en voûte pour gaz selon l'une quelconque des revendications 1 à 4, caractérisée en ce que lesdites voûtes à gaz (20a - 20f) sont disposées pour servir de structure d'écartement dans l'élément coulé, déterminant son épaisseur de paroi.

6. Structure en voûte pour gaz selon l'une quelconque des revendications 1 à 5, caractérisée en ce que lesdites voûtes à gaz (20a - 20f) sont reliées les unes aux autres à l'aide d'éléments de connexion (49).

7. Structure en voûte pour gaz selon l'une quelconque des revendications 1 à 5, caractérisée en ce que ladite structure en voûte pour gaz (20) est constituée par des voûtes à gaz (20a - 20f) séparées.

8. Structure en voûte pour gaz selon l'une quelconque des revendications 1 à 7, caractérisée en ce que chacune des voûtes à gaz (20a - 20f) comprend dans la partie supérieure de la cellule (11) un espace à gaz (50) et une ouverture de remplissage d'acide (51).

9. Structure en voûte pour gaz selon l'une quelconque des revendications 1 à 8, caractérisée en ce que lesdites voûtes à gaz (20a - 20f) sont collées auxdites cellules (11) avec une garniture molle et plane (43) comprimée étroitement entre ladite cellule (11) et ladite voûte à gaz.

10. Structure en voûte pour gaz selon l'une quelconque des revendications 1 à 8, caractérisée en ce que lesdites voûtes à gaz (20a - 20f) sont collées à la partie supérieure de ladite cellule (11) par des joints de colle (44).

11. Structure en voûte pour gaz selon l'une quelconque des revendications 1 à 8, caractérisée en ce que lesdites voûtes à gaz (20a - 20f) sont fixées auxdites cellules (11) par chauffage des parties marginales de ladite voûte à gaz et compression des parties marginales chauffées (45) sur ladite cellule (11).

12. Structure en voûte pour gaz selon l'une quelconque des revendications 1 à 8, caractérisée en ce que les surfaces supérieure et latérales desdites cellules (11) sont rendues étanches par un joint (46), et en ce que dans lesdites voûtes à gaz (20a - 20f) règne une contrainte dirigée vers l'intérieur.

13. Structure en voûte pour gaz selon la revendication 12, caractérisée en ce que la contrainte dirigée vers l'intérieur desdites voûtes à gaz (20a - 20f) est constituée à l'aide d'un moyen à ressort (47) disposé entre voûtes à gaz adjacentes.

14. Structure en voûte pour gaz selon l'une quelconque des revendications 1 à 8, caractérisée en ce que lesdites voûtes à gaz (20a - 20f) sont fixées auxdites cellules (11) par des joints mécaniques à encliquetage (48).

15. Structure en voûte pour gaz selon la revendication 14, caractérisée en ce que dans lesdites voûtes à gaz (20a - 20f) règne une contrainte dirigée vers l'intérieur.
